(19) Europäisches Patentamt
European Patent Office
Office européen des brevets

(11) **EP 2 863 553 B1**

(12) **EUROPÄISCHE PATENTSCHRIFT**

(45) Veröffentlichungstag und Bekanntmachung des Hinweises auf die Patenterteilung:
**13.12.2017 Patentblatt 2017/50**

(51) Int Cl.:
***H04B 3/56*** (2006.01)

(21) Anmeldenummer: **14189327.1**

(22) Anmeldetag: **17.10.2014**

(54) **Koppeleinrichtung zum Ankoppeln eines Powerline-Endgeräts und eines Messgeräts an ein Energieversorgungsnetzwerk sowie Messknoten**

Coupling device for coupling a powerline device and a measurement device to a power supply network, and a measurement node

Dispositif de couplage pour coupler un dispositif de courant porteur en ligne et un dispositif de mesure à un réseau d'alimentation, et un noeud de mesure

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.10.2013 DE 102013221150**

(43) Veröffentlichungstag der Anmeldung:
**22.04.2015 Patentblatt 2015/17**

(73) Patentinhaber: **Power Plus Communications AG**
**68167 Mannheim (DE)**

(72) Erfinder:
• **Mayer, Eugen**
**68305 Mannheim (DE)**
• **Rindchen, Markus**
**67574 Osthofen (DE)**
• **Gatzlaff, Sylvia**
**68259 Mannheim (DE)**
• **Veselcic, Marko**
**67122 Altrip (DE)**

(74) Vertreter: **Patent- und Rechtsanwälte Ullrich & Naumann**
**PartG mbB**
**Schneidmühlstrasse 21**
**69115 Heidelberg (DE)**

(56) Entgegenhaltungen:
**EP-A1- 1 065 818        CA-A1- 2 260 486**
**US-A1- 2008 122 642     US-A1- 2011 118 888**

EP 2 863 553 B1

**Beschreibung**

Die Erfindung betrifft eine Koppeleinrichtung zum Ankoppeln eines Powerline-Endgeräts und eines Messgeräts an ein mehrphasiges Energieversorgungsnetzwerk, insbesondere ein Mittelspannungsnetzwerk. Die Erfindung betrifft ferner einen Messknoten zum Erfassen einer physikalischen Größe in einem mehrphasigen Energieversorgungsnetzwerk, insbesondere ein Mittelspannungsnetzwerk.

Ein Energieversorgungsnetzwerk verbindet eine Vielzahl von Erzeugern und Verbrauchern untereinander, die über ein geografisches Gebiet verteilt sind. Das Energieversorgungsnetzwerk überträgt elektrische Energie von den Erzeugern zu den Verbrauchern. Damit das Energieversorgungsnetzwerk stabil bleibt und angeschlossene Verbraucher nicht beschädigt werden, müssen an einem Anschlusspunkt bestimmte Anforderungen an die Netzspannung erfüllt sein. In Deutschland sind diese beispielweise in der Norm DIN EN 50160 definiert. Dort sind die Anforderungen an die Netzspannung hinsichtlich Frequenz, Scheitelwert, Kurvenform und Symmetrie der Außenleiterspannungen festgelegt. Zum Überwachen des Einhaltens der Anforderungen müssen innerhalb des Energieversorgungsnetzwerks verschiedene physikalische Größen regelmäßig oder sogar kontinuierlich Messwerte gewonnen werden. Auch bei Wartung, Instandhaltung, Inbetriebnahme und Reparatur von Netzwerkteilen müssen Messungen durchgeführt werden. Dabei können Messungen in verschiedenen Teilen des Energieversorgungsnetzwerks auf verschiedenen Spannungsniveaus notwendig sein, wobei der Messung auf Mittelspannungsebene (also bei Wechselspannungen mit Effektivwerten zwischen 1 kV und 52 kV) meist besondere Bedeutung zukommt.

Durch die zunehmende Anzahl von erneuerbaren Energie-Einspeisern (Windkraft-, Photovoltaik-, Biogas-Anlagen, etc.) muss insbesondere die Spannungs- und Frequenzhaltung überwacht werden. Bei Über- oder Unterschreitung von Grenzwerten kann es notwendig sein, einen Einspeiser gezielt vom Netz zu nehmen, um die Stabilität des gesamten Netzes nicht zu gefährden.

Für die verschiedenen Messverfahren werden Spannungswandler eingesetzt, die an die Leitungen des Energieversorgungsnetzwerks angeschlossen sind. Dadurch können Messungen während des Betriebes an spannungsführenden Mittelspannungskabeln durchgeführt werden. Aufgrund des - je nach Anlagentyp - teilweise hohen Installationsaufwandes (z.B. durch das notwendige Freischalten zur Montage) werden in vielen Anlagen die Messungen hauptsächlich auf Störfälle und Inbetriebnahmen begrenzt.

In den Mittelspannungsnetzen in Deutschland sind Schaltanlagen verschiedener Bauformen (SF6, luftisoliert, offen, gekapselt, kompakt) aus 50 Jahren im Einsatz. SF6-Anlagen der letzten 10 bis 15 Jahre (also neuere Anlagen mit Schwefelhexafluorid als Isolier- und Lichtbogenlöschgas) verfügen in der Regel bereits über kapazitive Spannungsabgriffe, an denen Messequipment installiert werden kann, ohne die Anlage abschalten zu müssen. Derartige SF6-Anlagen bilden aber meist nur einen kleinen Teil eines Netzwerks. Beim überwiegenden Teil der installierten Anlagen handelt es sich um ältere luftisolierte Anlagen. Derartige Anlagen sind besonders im ländlichen Bereich im Einsatz, wo der Anteil an Photovoltaik-Anlagen stetig wächst. Bei diesen luftisolierten Anlagen werden Spannungswandler oftmals als Stützer oder Koppelelektroden nachgerüstet. Dies ist meist sehr aufwendig und in kompakten luftisolierten Anlagen durch den geringen verfügbaren Platz nicht immer umsetzbar.

Derzeit werden für die verschiedenen Messaufgaben im Netz Spannungswandler mit Kapazitäten von mehreren Pikofarad verwendet. Bei Inbetriebnahmen und Fehlerbehebungen werden Kapazitäten zur Messung eingesetzt, die installiert und nach Beendigung der Arbeiten wieder zurückgebaut werden. An diese temporär vorhandenen Kapazitäten werden Kabelmesswagen angeschlossen. So wird beispielsweise bei der Behebung von Fehlern auf den Kabeln ein Kondensator an das betreffende Kabel installiert und das Kabel mit einer Gleichspannungsquelle verbunden. Je nach Kabel werden Gleichspannungen im Bereich von $U_0$ bis $5U_0$ auf das Kabel gegeben ($U_0$ als Nennspannung des Kabels, bei einer 20 kV-Mittelspannungsstrecke sind dies beispielsweise $20kV/\sqrt{3}$ ) und die Entladeströme gemessen. Damit lassen sich eventuell vorhandene Teilentladungen feststellen. Ein ähnliches Vorgehen wird bei Inbetriebnahmen und Reparaturen durchgeführt. Hier wird an die Kapazität ein Kurbelinduktor mit einer Spannung von $U_0$ angeschlossen und auf Überschläge überprüft. Für einen dauerhaften Einsatz im Energieversorgungsnetzwerk sind diese Kondensatoren aber nicht geeignet.

Andere kapazitive oder induktive Ankopplungen an das Energieversorgungsnetzwerk sind aus dem Bereich der Powerline-Kommunikation auf Mittelspannungsebene bekannt. Die Ankopplung erfolgt über spezielle Signalkoppler, die in kapazitiver oder induktiver Ausführung verfügbar sind. Diese Signalkoppler sind für einen dauerhaften Einsatz im Netz entwickelt. Der Kapazitätswert liegt im einstelligen Nanofarad-Bereich. Die Übertragung erfolgt auf Kabeln einphasig und in Freileitungssystem zweiphasig. Diese Signalkoppler müssen aber für die Übertragung der Powerline-Signale optimiert sein. Für ein Messen von Größen innerhalb des Energieversorgungsnetzwerks sind diese Signalkoppler nicht geeignet.

Die Verwendung eines PLC (Powerline Communication)-Systems im Zusammenhang mit dem Messen physikalischer Größen ist beispielsweise in der US 2011/0118888 A1 offenbart. Dort sind primär ein System und ein Verfahren zum Verteilen von Datensignalen über ein Energieversorgungsnetzwerk mittels PLC gezeigt.

Es wird eine Bypass-Einheit eingesetzt, die eine Verbindung zwischen zwei Netzsegmenten bereitstellt, die sonst, beispielsweise durch einen Transformator, für PLC-Signale getrennt wären. Es wird unter anderem der Übergang von Niederspannung auf Mittelspannung genannt. Hierzu ist die Bypass-Einheit mit der Niederspannungsleitung und der Mittelspannungsleitung verbunden und fungiert als Gateway zwischen den beiden Leitungen. Gemäß einer Ausgestaltung umfasst die Bypass-Einheit einen A/D-Wandler, an den Messwerte, beispielsweise für Temperatur, Leistung oder Spannung, eingegeben werden kann. Es ist nicht beschrieben, wie die Messwerte konkret gewonnen werden.

Ein anderes System, das Leitungen eines Energieversorgungsnetzwerks zur Kommunikation nutzt, ist in der CA 2 260 486 A1 offenbart. Es wird für mehrere lokal kommunizierende Verbrauchszähler eine Kommunikationsfähigkeit über die Energieversorgungsleitungen geschaffen, so dass die einzelnen Verbrauchszähler untereinander und/oder mit einer zentralen Einheit kommunizieren können. Dies ermöglicht das Fernauslesen von Verbrauchswerten.

Aus der US 2008/0122642 A1 ist ein PLC-System bekannt, in das unter anderem Sensoren zum Messen von Parametern des Energieversorgungsnetzwerks integriert sind. Die durch die Sensoren bestimmten Messwerte werden an PLC-Geräte übergeben und von diesen in das PLC-System übertragen.

Der vorliegenden Erfindung liegt die Aufgabe zugrunde, eine Koppeleinrichtung und einen Messknoten der eingangs genannten Art derart auszugestalten und weiterzubilden, dass die Möglichkeit eines dauerhaften Anschlusses eines Messgeräts sowie eines Powerline-Endgeräts an ein Energieversorgungsnetzwerk zu möglichst geringen Kosten geschaffen werden kann.

Erfindungsgemäß wird die voranstehende Aufgabe durch die Merkmale des Anspruchs 1 gelöst. Danach umfasst die in Rede stehende Koppeleinrichtung, die einen Kommunikationsanschluss zum Anschließen des Powerline-Endgeräts und einen Messanschluss zum Anschließen des Messgeräts aufweist:

> einen Koppelkondensator mit einem ersten und einem zweiten Anschluss, wobei der erste Anschluss des Koppelkondensators mit einer der Phasen des Energieversorgungsnetzwerks verbunden ist, einer ersten Koppelschaltung und einer zweiten Koppelschaltung, wobei die erste und die zweite Koppelschaltung jeweils netzseitig mit dem zweiten Anschluss des Koppelkondensators verbunden ist, wobei der dem Energieversorgungsnetzwerk abgewandte Anschluss der ersten Koppelschaltung mit dem Kommunikationsanschluss und der dem Energieversorgungsnetzwerk abgewandte Anschluss der zweiten Koppelschaltung mit dem Messanschluss verbunden ist, wobei die erste Koppelschaltung dazu ausgebildet ist, Powerline-Signale aus dem Energieversorgungsnetzwerk zum dem Kommunikationsanschluss zu leiten und umgekehrt, und wobei die zweite Koppelschaltung dazu ausgebildet ist, an dem Messanschluss ein Messsignal bereitzustellen, das für eine physikalische Größe im Energieversorgungsnetzwerk repräsentativ ist.

Hinsichtlich eines Messknotens ist die voranstehende Aufgabe durch die Merkmale des Anspruchs 15 gelöst. Danach umfasst der Messknoten:

> eine Koppeleinrichtung nach einem der Ansprüche 1 bis 14, wobei die Koppeleinrichtung an eine oder mehrere Phasen des Energieversorgungsnetzwerks angekoppelt ist, ein Messgerät, das ein an dem Messanschluss der Koppeleinrichtung anliegendes Signal auswertet und einen digitalisierten Wert erzeugt, der für das Signal repräsentativ ist, und ein Powerline-Endgerät, das mit dem Messgerät kommunizierend verbunden ist und eine Kommunikation über die Koppeleinrichtung zwischen dem Messgerät und einem über das Energieversorgungsnetzwerk verbundenen entfernten Endgerät ermöglicht.

In erfindungsgemäßer Weise ist zunächst erkannt worden, dass durch Weiterbildung der bereits aus der Praxis bekannten Powerline-Signalkoppler auf einfache Art und Weise eine Koppeleinrichtung entstehen kann, die sowohl für Powerline-Signale als auch für Messsignale geeignet ist. Dabei ist es jedoch nicht notwendig, einen bekannten Signalkoppler in einer Art Kompromiss-Dimensionierung derart auszulegen, dass sowohl Messsignale als auch Powerline-Signale über den Signalkoppler übertragen werden können. Vielmehr wird erfindungsgemäß die Koppeleinrichtung derart aufgeteilt, dass zwei Koppelschaltungen innerhalb der Koppeleinrichtung vorgesehen sind, von denen eine für die Datenübertragung (erste Koppelschaltung) und eine für die Messaufgabe (zweite Koppelschaltung) optimiert sind.

Dabei wird erfindungsgemäß mindestens ein Teil der Koppeleinrichtung für beide Zwecke (Messung und Datenübertragung) gemeinsam verwendet. Hierzu umfasst die erfindungsgemäße Koppeleinrichtung einen Koppelkondensator, der einen ersten und einen zweiten Anschluss aufweist. Der erste Anschluss des Koppelkondensators ist mit einer der Phasen des Energieversorgungsnetzwerkes verbunden, während der zweite Anschluss des Koppelkondensators jeweils mit einem der Anschlüsse der ersten und der zweiten Koppelschaltung verbunden ist. Der netzseitige Anschluss der ersten und der zweiten Koppelschaltung ist damit über den Koppelkondensator mit dem Energieversorgungsnetzwerk verbunden und die beiden Koppelschaltungen parallel geschaltet. Der dem Energieversorgungsnetzwerk abgewandte Anschluss der ersten Koppelschaltung ist mit einem Kommunikationsanschluss der Koppeleinrichtung verbunden; der dem Energieversorgungsnetzwerk abgewandte Anschluss der zweiten Koppelschaltung ist mit einem Messanschluss der Koppeleinrichtung verbunden.

Die erste Koppelschaltung ist dabei dazu ausgebildet, Powerline-Signale aus dem Energieversorgungsnetzwerk zu dem Kommunikationsanschluss bzw. Powerline-Signale von dem Kommunikationsanschluss an das Energieversorgungsnetzwerk zu leiten. Auf diese Weise stellen der Koppelkondensator und die erste Koppelschaltung für Powerline-Signale eine Verbindung zwischen Kommunikationsanschluss und Energieversorgungsnetzwerk her. Die zweite Koppelschaltung ist dazu ausgebildet, an dem Messausgang ein Signal bereitzustellen, das für eine physikalische Größe im Energieversorgungsnetzwerk repräsentativ ist. Diese physikalische Größe kann beispielsweise der Scheitelwert der Netzspannung, ein Effektivwert der Netzspannung, ein zeitlicher Verlauf der Netzspannung zur Feststellung der Kurvenform der Netzspannung, die Frequenz der Netzspannung oder hochfrequente Störanteile aus dem Energieversorgungsnetzwerk sein.

Durch Verwendung eines gemeinsamen Koppelkondensators ist es möglich, die Koppeleinrichtung kompakt zu halten, da der meist recht voluminöse Koppelkondensator nur einmal vorgesehen sein muss. Dennoch ist es durch die Bereitstellung einer ersten und einer zweiten Koppelschaltung möglich, die gesamte Koppeleinrichtung sowohl für das Anschließen eines Powerline-Endgeräts als auch für das Anschließen eines Messgerätes zu optimieren, ohne dass eine Kompromiss-Konfiguration notwendig wäre. Gleichzeitig lässt sich der Koppelkondensator durch auf dem Markt verfügbare Koppelkondensatoren für Signalkoppler implementieren, wodurch ein relativ kostengünstiges Gerät entsteht. Durch die Kombination von Mess- und Kommunikationsaufgaben in einer Koppeleinrichtung wird der Installationsaufwand reduziert. Insbesondere der Bereich der Mittelspannungsnetzwerke wird derzeit in erheblichem Maße für Kommunikationsaufgaben erschlossen. Durch die erfindungsgemäße Koppeleinrichtung kann mit der Installation des Signalkopplers gleichzeitig die Funktionalität des Auskoppelns von Messsignalen hinzugefügt werden, ohne dass zwei separate Geräte zu installieren wären.

Vorzugsweise sind dabei Koppelkondensator, erste Koppelschaltung und zweite Koppelschaltung in einem gemeinsamen Gehäuse angeordnet. Dadurch entstehen kompakte Geräte, die auch in beengten Schaltanlagen installiert werden können.

Zum Erzielen eines möglichst robusten Gerätes ist das Gehäuse vorzugsweise aus einem Metall, wie beispielsweise Aluminium, Edelstahl oder verzinktem Stahlblech, hergestellt. Das gemeinsame Gehäuse hat dann mindestens drei nach außen geführte Anschlüsse: Einen Anschluss zum Verbinden mit dem Energieversorgungsnetzwerk, einen Kommunikationsanschluss zum Anschließen eines Powerline-Endgeräts und einen Messanschluss zum Anschließen eines Messgeräts. Die Anschlüsse können dabei auf verschiedene Weise ausgebildet sein. So sind aus dem Gehäuse geführte Kabel, beispielsweise für den Netzanschluss, ebenso denkbar wie die Verwendung von Anschlussbuchsen, beispielsweise für den Mess- und/oder Kommunikationsanschluss.

Die Koppeleinrichtung kann auch zum Ankoppeln an mehrere Phasen des Energieversorgungsnetzwerkes ausgestaltet sein. Bei dieser Ausgestaltung ist für jede Phase, an die die Koppeleinrichtung angekoppelt werden soll, ein Koppelkondensator vorgesehen. Wenn die Koppeleinrichtung beispielsweise an alle drei Phasen eines Drehstromnetzwerks angekoppelt werden soll, würde die Koppeleinrichtung demnach drei Koppelkondensatoren enthalten. Gleichzeitig sind für jeden Koppelkondensator eine erste Koppelschaltung und/oder eine zweite Koppelschaltung vorgesehen. So ist es bei dem oben genannten Beispiel denkbar, dass Messwerte aus allen drei Phasen des Mittelspannungsnetzwerks bezogen werden sollen, jedoch lediglich eine Phase zur Kommunikation genutzt werden soll. In diesem Beispiel könnte die Koppeleinrichtung drei Koppelkondensatoren, eine erste Koppelschaltung und drei zweite Koppelschaltungen aufweisen. Bei einer mehrphasigen Ausführung der Koppeleinrichtung kann die Koppeleinrichtung mehrere Kommunikationsanschlüsse und mehrere Messanschlüsse aufweisen. Entsprechend wären beispielsweise bei zwei ersten Kommunikationsschaltungen und bei gewünschter Modulation der Powerline-Signale zwischen zwei Phasen zwei Kommunikationsanschlüsse vorhanden. Das Powerline-Endgerät würde dann mit den beiden Kommunikationsanschlüssen verbunden und es würde eine Modulation zwischen den beiden Kommunikationsanschlüssen erfolgen. Zur Vereinfachung des Anschließens des Powerline-Endgerätes bzw. des Messgerätes können die mehreren Kommunikationsanschlüsse bzw. die mehreren Messanschlüsse in einer gemeinsamen, mehrpoligen Anschlussbuchse zusammengefasst sein.

In einer besonders bevorzugten Ausgestaltung ist die erste Koppelschaltung dazu ausgebildet, Breitband-Powerline-Signale zu übertragen. Bei den derzeit gebräuchlichen Varianten von Breitband-Powerline wird ein Frequenzband zwischen 1 MHz und 30 MHz verwendet. In dem Frequenzband ist eine Vielzahl von Subkanälen gebildet, auf die Signale moduliert werden.

Bei dieser bevorzugter Ausgestaltung ist die erste Koppelschaltung vorzugsweise als Koppelnetzwerk ausgebildet, wie es aus dem Stand der Technik bekannt ist. Dabei kommen vorwiegend passive Bauelemente zum Einsatz, vorzugsweise Übertrager (d.h. ein Transformator mit Übersetzungsverhältnis 1:1), Transformatoren, Kapazitäten und/oder Spulen. Diese passiven Bauelemente können prinzipiell beliebig verschaltet sein. Entsprechende Schaltungen sind aus der Praxis bekannt. Die erste Koppelschaltung kann in Zusammenspiel mit dem Koppelkondensator speziell auf die zu übertragenden Powerline-Signale abgestimmt sein. Insgesamt halten der Koppelkondensator und das erste Koppelnetzwerk die Netzspannung von dem Kommunikationsanschluss ab und leiten die (hochfrequenten) Powerline-Signale aus dem Energieversorgungsnetzwerk an den Kommunikationsanschluss und umgekehrt.

Je nach gewünschter Funktion der zweiten Koppelschaltung kann diese aktive und/ oder passive Bauelemente umfassen. Bei Verwendung passiver Bauelemente weist die zweite Koppelschaltung vorzugsweise Übertrager, Transformatoren, Kapazitäten und/oder Spulen auf, die in beliebigen Kombinationen verschaltet sein können. Da sich bei in Reihenschaltung von Kapazitäten die Summenkapazität reduziert, kann die für Kommunikationszwecke üblicherweise höher gewählte Koppelkapazität durch eine zu dem Koppelkondensator der Koppeleinrichtung in Reihe geschaltete weitere Kapazität auf niedrigere Werte reduziert werden. Dadurch würde eine Art kapazitiver Spannungsteiler entstehen.

Aktive Bauelemente können beispielsweise Transistoren, Operationsverstärker oder Mikroprozessoren umfassen. Wesentlich dabei ist, dass diese ausreichend gegenüber der Netzspannung geschützt sind, damit die aktiven Bauelemente nicht zerstört werden. Hierzu sind aus der Praxis hinlänglich geeignete Maßnahmen bekannt.

Die zweite Koppelschaltung kann einen Spannungswandler umfassen. Spannungswandler werden dazu genutzt, um die hohe Netzspannung - Oberspannung - in eine deutliche niedrigere Spannung - Unterspannung - zu wandeln, die dann durch übliche Messgeräte verwertet werden kann. Denkbar ist beispielsweise, dass eine Oberspannung von 20 kV auf ein Spannungsniveau von 100 V reduziert wird. Auf diese Weise können übliche Spannungsmessgeräte an den Messausgang angeschlossen werden. Derartige Spannungswandler sind üblicherweise durch passive Bauelemente, beispielsweise in Form eines kapazitiven Spannungsteilers, aufgebaut.

Alternativ oder zusätzlich kann die zweite Koppelschaltung eine Schutzschaltung aufweisen, durch die ein an dem Messanschluss angeschlossenes Messgerät geschützt wird. Eine derartige Schutzbeschaltung kann beispielsweise das Durchleiten kurzfristiger Überspannungen durch einen Blitzschlag oder Schaltpulse verhindern. Denkbar wäre auch eine Schutzschaltung, die den über den Messanschluss fließenden Strom begrenzt. Prinzipiell können die verschiedensten aus der Praxis bekannten Schutzschaltungen Anwendung finden, wobei zu beachten ist, dass die Schutzschaltung das eigentliche Messsignal nicht oder lediglich in einem nachvollziehbaren Maße beeinflusst wird. Derartige Schutzschaltungen umfassen üblicherweise passive Bauelemente, oft auch passive Halbleiterelemente.

Die zweite Schutzschaltung kann eine Schaltung zum Aufbereiten des Messsignals, das für die physikalische Größe im Energieversorgungsnetzwerk repräsentativ ist, aufweisen. Eine derartige Aufbereitung kann durch passive Bauelemente, wie beispielsweise durch Tiefpass- oder Bandpassfilter, erfolgen. Gleichzeitig können auch aktive Elemente verwendet werden, mit denen beispielsweise das Messsignal verstärkt wird. Denkbar wäre auch das Messsignal bereits zu digitalisieren und das digitale Signal als aufbereitetes Messsignal über den Messausgang auszugeben. So wäre es beispielsweise denkbar, dass in der zweiten Koppelschaltung zunächst eine Hochpassfilterung erfolgt, danach das hochpassgefilterte Signal verstärkt und einem Downsampling unterzogen wird und anschließend einem ADSP (Advanced Digital Signal Processor) zugeführt wird. Der ADSP könnte eine diskrete Fouriertransformation durchführen, ein Frequenzband aus dem Signal auswählen und anschließend mit einer inversen Fouriertransformation wieder zu einem digitalisierten Zeitsignal zurücktransformieren. Das derart digitalisierte und bandpassgefilterte Messsignal würde dann am Messausgang ausgegeben. Auf diese Weise kann durch entsprechende Ausgestaltung der zweiten Koppelschaltung flexibel auf die verschiedensten Gegebenheiten angegangen werden.

In einer bevorzugten Ausgestaltung ist die zweite Koppelschaltung abstimmbar ausgebildet. Diese Abstimmung kann zum einem bei der Installation der Koppeleinrichtung erfolgen, in dem beispielsweise Potentiometer eingestellt oder durch Steckbrücken diskret vorhandene Bauelemente ausgewählt werden. Eine Abstimmung kann auch, insbesondere bei Verwendung aktiver Komponenten in der zweiten Koppelschaltung, durch Einstellen einer Verstärkungsfaktors oder Definieren einer Bandbreite des am Messausgang anliegenden Messsignals bestehen. Alternativ und zusätzlich können die Einstellung während des Betriebs an dem Energieversorgungsnetzwerk eingestellt werden. So kann an der Koppeleinrichtung ein Parametrieranschluss vorgesehen sein, an dem beispielsweise das Messgerät angeschlossen ist. Das Messgerät kann dann über den Parametrieranschluss derart auf die Koppeleinrichtung einwirken, dass in der Koppeleinrichtung Parameter für eine bestimmte Messung angepasst werden. Das Messgerät kann die hierfür notwendigen Informationen auch aus dem Energieversorgungsnetzwerk über Powerline-Kommunikation erhalten. Demnach würde ein Powerline-Endgerät über die erste Koppelschaltung und den Kommunikationsanschluss ein Powerline-Signal empfangen, das Informationen zur Einstellung von Parametern der zweiten Koppelschaltung enthält. Das Powerline-Endgerät würde die Informationen geeignet umsetzen und an das Messgerät weiterleiten. Auf diese Weise kann flexibel, beispielsweise von einer Leitwarte aus, die zweite Koppelschaltung eingestellt werden.

Die Koppeleinrichtung kann zum Anschluss von verschiedensten Messgeräten ausgebildete sein. In einer bevorzugten Ausgestaltung ist der Messausgang zum Anschluss eines Spannungsmessgeräts, eines Frequenzmessgeräts und/oder eines Netzanalysators ausgebildet. Die zweite Koppelschaltung bzw. die zweiten Koppelschaltungen wären dann derart ausgestaltet, dass ein für diese Messgeräte geeignetes Messsignal am Messausgang bereitgestellt werden kann. Bei Anschluss eines Netzanalysators würde dies beispielsweise bedeuten, dass Messsignale für die Spannung an jeder Phase des Energieversorgungsnetzwerks bereitgestellt werden. Gleichzeitig sollten Messsignale verfügbar sein, die Rückschlüsse auf die in dem Energieversorgungsnetzwerk fließenden Ströme zulassen. Dies kann beispielsweise rechnerisch durch einen ermittelten Spannungswert oder durch Messung des Stroms erfolgen. Für letzteres könnte zusätzlich ein Stromwandler eingesetzt werden, der um einen stromführenden Leiter des Energieversorgungsnetzwerks angeordnet ist. Für eine dreiphasige Messung könnten auch drei Stromwandler vorgesehen sein. Das Messsignal aus dem/den Stromwandlern, das für den in dem Leiter fließenden Strom repräsentativ ist, könnte dann direkt beispielsweise in den Netzanalysator eingegeben werden.

Der Messausgang kann auch als Uo-Schnittstelle ausgebildet sein. An die Uo-Schnittstelle kann beispielsweise ein Erdschlussrelais angeschlossen sein, das bei Überschreiten einer Verlagerungsspannung in dem Energieversorgungsnetzwerk betätigt wird. Wird beispielsweise einer der Leiter eines Drehstromsystems durch eine Beschädigung auf Erde gezogen, führt dieser Leiter praktisch keine Spannung gegen Erde mehr. Die "gesunden" Leiter des Drehstromsystems führen höhere Dreieckspannungen gegen Erde. Dadurch verschiebt sich der Sternpunkt des Drehstromsystems, wodurch zum Erdpotential eine Verlagerungsspannung auftritt. Durch einen Summenwandler kann diese Verlagerungsspannung detektiert und über die Uo-Schnittstelle an ein Erdschlussrelais ausgegeben werden. In diesem Fall wäre also die Koppeleinrichtung zum Anschluss an alle Phasen des Energieversorgungsnetzwerks ausgebildet. Die zweiten Koppelschaltungen würden die Spannungen an den einzelnen Phasen miteinander vergleichen und ein Signal über die Uo-Schnittstelle ausgeben, wenn die Verlagerungsspannung einen vorgegebenen Wert überschreitet.

In einer anderen Ausgestaltung ist die zweite Koppelschaltung zum Anschluss eines Messgeräts zur Bestimmung von Teilentladungen ausgebildet. Hierzu kann beispielsweise die zweite Koppelschaltung einen engen Bandbreitenbereich von Störsignalen aus dem Energieversorgungsnetzwerk herausfiltern und diesen hinsichtlich besonderer Charakteristika überwachen. Dies kann beispielsweise dadurch erfolgen, dass der zeitliche Bezug der detektierten Störsignale zu der Netzspannung bestimmt und untersucht wird. Teilentladungen führen stets zu netzsynchronen Störungen, was auf diese Weise detektiert werden kann.

Zum Erzielen einer besonders universellen Koppeleinrichtung kann die zweite Koppelschaltung auch lediglich eine erste Vorbereitung eines Messsignals am Messanschluss bereitstellen. Ein an den Messanschluss angeschlossenes Modul kann dann eine weitere Aufbereitung des Messsignals vornehmen, beispielsweise eine Bandpassfilterung oder eine Digitalisierung des Messwerts vornehmen.

Vorzugsweise weist der Koppelkondensator einen Wert zwischen 1 Nanofarad (nF) und 10 Nanofarad auf, d.h. der Wert des Koppelkondensators liegt im einstelligen oder zumindest nahe des einstelligen nF-Bereichs.

Für eine besonders einfache Auswertbarkeit des Messsignals sind Koppelkondensator und zweite Koppelschaltung vorzugsweise derart ausgebildet, dass sie gemeinsam eine lineare Kennlinie oder eine weitestgehend lineare Kennlinie über dem Messbereich der physikalischen Größe hinweg aufweist. Auf diese Weise können aufwendige Linearisierungsmaßnahmen bei der Auswertung des Messsignals entfallen. Dabei ist auch denkbar, dass die zweite Koppelschaltung derart ausgebildet ist, dass das über den Koppelkondensator empfangene Messsignal linearisiert wird. Dies ist insbesondere im Rahmen einer Aufbereitung des Messsignals möglich.

Vor Installation der Koppeleinrichtungen können Kalibrierungsmessungen vorgenommen werden, mit der das Verhalten der zweiten Koppelschaltung bei unterschiedlichen Eingangsgrößen aufgenommen wird. Auf diese Weise kann eine Kennlinie bestimmt werden, wodurch eine Linearisierung des Messsignals ermöglicht wird. Die Kennlinie kann dann in der zweiten Koppelschaltung oder dem Messgerät abgelegt und verwendet werden.

Durch die Verwendung einer ersten und zweiten Koppelschaltung in einer gemeinsamen Koppeleinrichtung ist es prinzipiell möglich, dass sich Kommunikationsvorgang und Messvorgang gegenseitig beeinflussen. Zur Vermeidung einer derartigen Beeinflussung ist die erste und die zweite Koppelschaltung vorzugsweise gegeneinander geschirmt aufgebaut. Dies kann durch einer Schirmung, beispielsweise mit einer metallisierten Umhüllung der ersten und/oder der zweiten Koppelschaltung, erfolgen. Es wäre denkbar, das Gehäuse der Koppeleinrichtung in zwei Teile zu unterteilen, die durch eine Metallwand getrennt sind, wobei in dem einen Teil die erste Koppelschaltung und in dem anderen Teil die zweite Koppelschaltung angeordnet ist.

Zusätzlich oder alternativ kann eine gegenseitige Störung eines Kommunikationsvorgangs und eines Messvorgangs dadurch vermieden werden, dass der Kommunikationsvorgang und/oder der Messvorgang gegenseitig koordiniert sind. Dies kann beispielsweise dadurch erfolgen, dass bei einem schmalbandigen Messsignal der Frequenzbereich des Messsignals im Spektrum des Powerline-Signals nicht für die Kommunikation genutzt wird. Eine gegenseitige Koordinierung kann aber auch dadurch erfolgen, dass immer dann, wenn ein Messvorgang erfolgt, die Kommunikation kurzfristig deaktiviert wird. Dies ist insbesondere dann interessant, wenn ein Messvorgang lediglich kurzfristig und mit geringer Wiederholungsrate erfolgt und in kurzer Zeit abgeschlossen ist. Auf diese Weise kann eine gegenseitige Störung vermieden oder zumindest erheblich reduziert werden.

Nach einem anderen Aspekt der Erfindung kommt die erfindungsgemäße Koppeleinrichtung in einem Messknoten zum Einsatz, der zum Erfassen einer physikalischen Größe in einem mehrphasigen Energieversorgungsnetzwerk ausgebildet ist. Das Energieversorgungsnetzwerk ist dabei vorzugsweise ein Mittelspannungsnetzwerk. Der Messknoten umfasst eine Koppeleinrichtung, ein Powerline-Endgerät und ein Messgerät. Die Koppeleinrichtung ist zur Ankopplung an eine oder mehrere Phasen des Energieversorgungsnetzwerks ausgebildet. Dies hängt - wie zuvor bereits beschrieben - von dem jeweiligen Messzweck des Messgeräts ab. Die Koppeleinrichtung ist entsprechend mit einer oder mehreren Phasen verbunden. Das Messgerät ist an den Messanschluss der Koppeleinrichtung angeschlossen. Das Powerline-Endgerät ist mit dem Kommunikationsanschluss der Koppeleinrichtung verbunden. Zusätzlich sind Messgerät und Powerline-Endgerät kommunizierend miteinander verbunden. Das Powerline-Endgerät kann beispielsweise durch ein Powerline-Modem ausgebildet sein, das auch in dem Gehäuse des Messgeräts integriert sein kann.

Beim Betrieb eines derartigen Messknotens würde das Messgerät über den Koppelkondensator und die zweite Koppelschaltung ein Messsignal erhalten, das für die zu messende physikalische Größe repräsentativ ist. Das Messgerät würde dieses Messsignal auswerten und geeignet digitalisieren. Der dadurch entstehende Messwert, eine Aggregation mehrerer Messwerte oder ein aus einem oder mehreren Messwerten bestimmter Kennwert könnte dann über das Powerline-Endgerät, die ersten Koppelschaltung, den Koppelkondensator und einen Kommunikationskanal, der auf einer oder mehreren Phasen des Energieversorgungsnetzwerk gebildet ist, zu einem entfernten Rechner gesendet werden. Der entfernte Rechner könnte beispielsweise ein Auswerterechner in einer Leitwarte des Energieversorgungsnetzwerks umfassen, an dem der Messwert oder der Kennwert ausgewertet wird. Der Messknoten kann beispielsweise bei einer Photovoltaikanlage angebracht sein, die auf Mittelspannungsebene Energie einspeist. Es kann dann auch ein Kommunikationspfad von der Leitwarte über den Kommunikationskanal, den Koppelkondensator, die erste Koppelschaltung und das Powerline-Endgerät gebildet sein, über den beispielsweise Einstellungen an dem Wechselrichter der Anlage vorgenommen oder die Anlage abgeschaltet werden kann. Die Breitband-Powerline-Technologie kann prinzipiell über die Koppeleinrichtung auch auf spannungsfreien Kabeln kommunizieren. In diesem Fall sollte lediglich eine Spannungsversorgung für das Powerline-Endgerät und das Messgerät vorgehalten werden.

Es gibt nun verschiedene Möglichkeiten, die Lehre der vorliegenden Erfindung in vorteilhafter Weise auszugestalten und weiterzubilden. Dazu ist einerseits auf die dem Anspruch 1 nachgeordneten Ansprüche und andererseits auf die nachfolgende Erläuterung eines bevorzugten Ausführungsbeispiels der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen

Fig. 1     eine schematische Darstellung einer erfindungsgemäßen Koppeleinrichtung zur Ankopplung an ein Mittelspannungsnetzwerk und

Fig. 2     eine schematische Darstellung eines erfindungsgemäßen Messknotens mit einer erfindungsgemäßen Koppeleinrichtung.

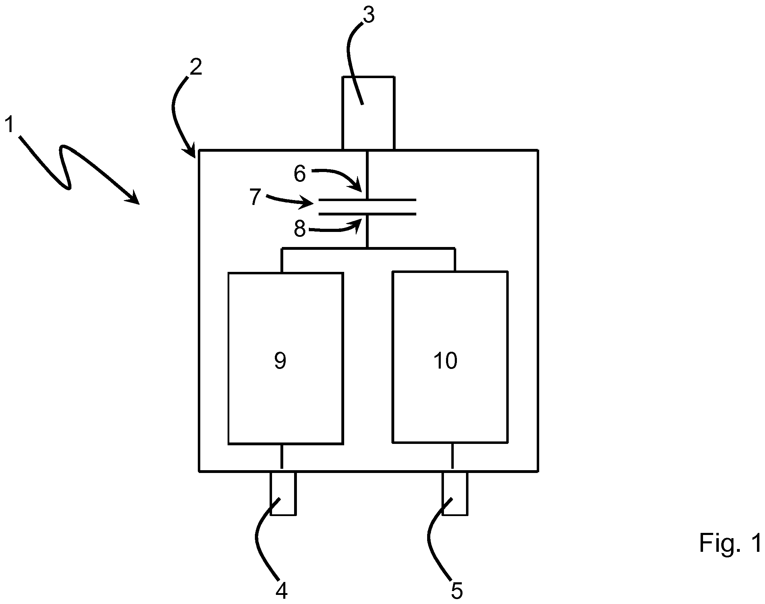

Fig. 1 zeigt eine schematische Darstellung einer erfindungsgemäßen Koppeleinrichtung, wobei die Koppeleinrichtung einphasig ausgebildet ist. Die Koppeleinrichtung 1 ist in einem Gehäuse 2 angeordnet und weist drei nach außen geführte Anschlüsse auf: einen Netzanschluss 3, einen Kommunikationsanschluss 4 und einen Messanschluss 5. Der Netzanschluss 3 ist mit einer Phase des Energieversorgungsnetzwerks (nicht eingezeichnet) verbunden. Innerhalb des Gehäuses 2 ist ein erster Anschluss 6 eines Koppelkondensators 7 mit dem Netzanschluss 3 verbunden. Der zweite Anschluss 8 des Koppelkondensators ist mit einer ersten Koppelschaltung 9 und einer zweiten Koppelschaltung 10 verbunden. Dadurch sind die erste und die zweite Koppelschaltung parallel geschaltet.

Der dem Energieversorgungsnetzwerk abgewandte Anschluss der ersten Koppelschaltung ist mit dem Kommunikationsanschluss 4 verbunden. Entsprechend ist die erste Koppelschaltung 9 dazu ausgestaltet, Powerline-Signale aus dem Energieversorgungsnetzwerk, die über den Koppelkondensator 7 empfangen werden, an den Kommunikationsanschluss 4 (und ein dort angeschlossenes Powerline-Endgerät) weiterzuleiten. Umgekehrt ist die erste Koppelschaltung 9 auch dazu ausgestaltet, Powerline-Signale, die an dem Kommunikationsanschluss 4 von einem dort angeschlossenen Powerline-Endgerät empfangen werden, über den Koppelkondensator 7 an das Energieversorgungsnetzwerk weiterzuleiten.

Der dem Energieversorgungsnetzwerk abgewandte Anschluss der zweiten Koppelschaltung 10 ist mit dem Messanschluss 5 verbunden. Die zweite Koppelschaltung 10 ist dazu ausgestaltet ein Messsignal an den Messanschluss 5 auszugeben, das für eine zu messende physikalische Größe innerhalb des Energieversorgungsnetzwerks repräsentativ ist.

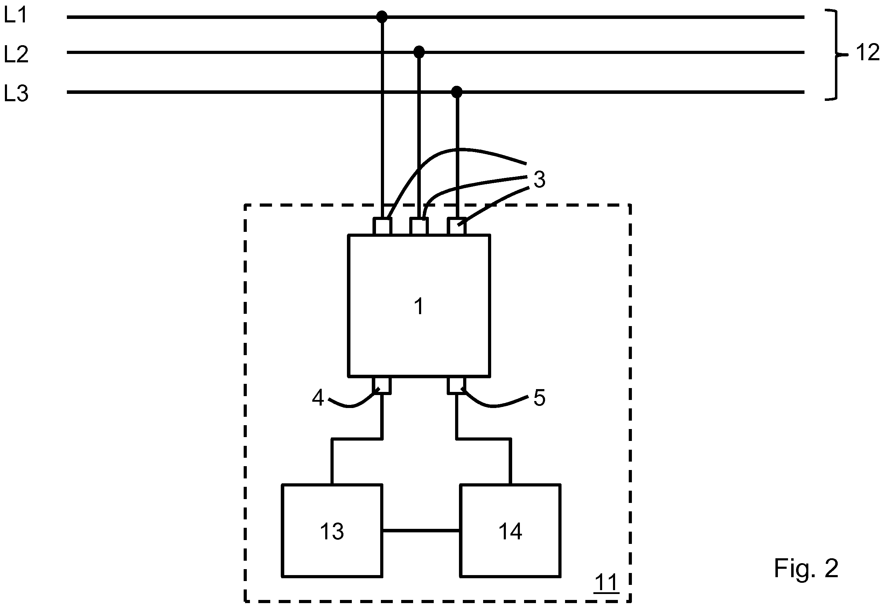

Fig. 2 zeigt eine schematische Darstellung eines erfindungsgemäßen Messknotens 11. Der Messknoten umfasst eine erfindungsgemäße Koppeleinrichtung 1 mit drei Netzanschlüssen 3, die jeweils mit einer der Phasen L1, L2, L3 eines Energieversorgungsnetzwerks 12 verbunden sind. Dementsprechend sind innerhalb der Koppeleinrichtung 1 drei Koppelkondensatoren angeordnet, die jeweils mit einem der Netzanschlüsse verbunden sind. Am Kommunikationsanschluss 4 der Koppeleinrichtung ist ein Powerline-Endgerät 13 und an dem Messanschluss 5 ein Messgerät 14 angeschlossen. Der Übersichtlichkeit wegen ist lediglich eine Verbindung zwischen Kommunikationsanschluss 4 und Powerline-Endgerät 13 bzw. zwischen Messausgang 5 und Messgerät 14 eingezeichnet. Es sei allerdings darauf hingewiesen, dass die Verbindungen auch mehrphasig ausgebildet sein können, so dass das Messgerät beispielsweise Messwerte aus allen drei Phasen L1, L2, L3 bestimmen kann. Das Powerline-Endgerät 13 und das Messgerät 14 sind untereinander kommunizierend verbunden. Denkbar wäre beispielsweise eine Verbindung über Ethernet oder USB (Universal Serial Bus). Die Koppeleinrichtung 1 weist drei Netzanschlüsse auf.

An den Messanschluss kann Messequipment für verschiedenes Messaufgaben angeschlossen werden, z.B.

- Spannungs- und Frequenzmessungen für Über- und Unterschreitungen von Grenzwerten
- Anschlüsse für Netzanalysatoren
- Hoch- oder niederohmige Spannungsprüfsysteme
- In Kombination mit Summenwandlern Anschlüsse für Erdschlussrichtungsrelais

Die erfindungsgemäße Koppeleinrichtung kann damit sowohl als Signalkoppler als auch als Messkoppler genutzt werden kann. Dabei hat sich die Anforderung für Signalkoppler, eine höhere Kapazität einzusetzen, als Vorteil für die Messkopplung erwiesen. Der Messanschluss kann vor oder während der Inbetriebnahme abgestimmt bzw. vermessen werden, um den Einfluss auf das Messergebnis zu kennen und bei der Auswertung der Messungen berücksichtigt zu werden. Der Messanschluss kann als Spannungswandler ausgeführt sein, um geeignete Anschlüsse für Spannungsmessgeräte und Uo-Schnittstellen für Erdschlussrelais bereit zu stellen.

Die zweite Koppelschaltung erfüllt vorzugsweise folgende Anforderungen:

- linear im Messbereich
- abgestimmt und kalibriert
- Schutzbeschaltung für den Anschluss von Messgeräten

Mögliche Messungen sind zum Beispiel:

- Spannungsmessung über kapazitiven Spannungsteiler
- Messung der Teilentladung

Hinsichtlich weiterer vorteilhafter Ausgestaltungen der erfindungsgemäßen Koppeleinrichtung wird zur Vermeidung von Wiederholungen auf den allgemeinen Teil der Beschreibung sowie auf die beigefügten Ansprüche verwiesen.

Schließlich sei ausdrücklich darauf hingewiesen, dass das voranstehend beschriebene Ausführungsbeispiel der erfindungsgemäßen Koppeleinrichtung lediglich zur Erörterung der beanspruchten Lehre dienen, diese jedoch nicht auf das Ausführungsbeispiel einschränken.

## Bezugszeichenliste

| | |
|---|---|
| 1 | Koppeleinrichtung |
| 2 | Gehäuse (der Koppeleinrichtung) |
| 3 | Netzanschluss |
| 4 | Kommunikationsanschluss |
| 5 | Messanschluss |
| 6 | erster Anschluss (des Koppelkondensators) |
| 7 | Koppelkondensator |
| 8 | zweiter Anschluss (des Koppelkondensators) |
| 9 | erste Koppelschaltung |
| 10 | zweite Koppelschaltung |
| 11 | Messknoten |
| 12 | Energieversorgungsnetzwerk |
| 13 | Powerline-Endgerät |
| 14 | Messgerät |

## Patentansprüche

1. Koppeleinrichtung zum Ankoppeln eines Powerline-Endgeräts und eines Messgeräts an ein mehrphasiges Energieversorgungsnetzwerk, wobei die Koppeleinrichtung (1) einen Kommunikationsanschluss (4) zum Anschließen des Powerline-Endgeräts (13) und einen Messanschluss (5) zum Anschließen des Messgeräts (14) aufweist, wobei die Koppeleinrichtung (1) umfasst:

einen Koppelkondensator (7) mit einem ersten und einem zweiten Anschluss (6, 8), wobei der erste Anschluss (6) des Koppelkondensators (7) mit einer der Phasen (L1, L2, L3) des Energieversorgungsnetzwerks (12) verbunden ist, und eine erste Koppelschaltung (9), die netzseitig mit dem zweiten Anschluss (8) des Koppelkondensators (7) verbunden ist, wobei der dem Energieversorgungsnetzwerk (12) abgewandte Anschluss der ersten Koppelschaltung (9) mit dem Kommunikationsanschluss (4) verbunden ist und wobei die erste Koppelschaltung (9) dazu ausgebildet ist, Powerline-Signale aus dem Energieversorgungsnetzwerk (12) zum dem Kommunikationsanschluss (4) zu leiten und umgekehrt, **gekennzeichnet durch** eine zweite Koppelschaltung (10), wobei die zweite Koppelschaltung (10) netzseitig mit dem zweiten Anschluss (8) des Koppelkondensators (7) verbunden ist, wobei der dem Energieversorgungsnetzwerk (12) abgewandte Anschluss der zweiten Koppelschaltung (10) mit dem Messanschluss (5) verbunden ist und wobei die zweite Koppelschaltung (10) dazu ausgebildet ist, an dem Messanschluss (5) ein Messsignal bereitzustellen, das für eine physikalische Größe im Energieversorgungsnetzwerk (12) repräsentativ ist.

2. Koppeleinrichtung nach Anspruch 1, **dadurch gekennzeichnet, dass** die Koppeleinrichtung (1) zum Ankoppeln an mehrere Phasen (L1, L2, L3) des Energieversorgungsnetzwerks (12) mehrere Koppelkondensatoren (7) und mehrere erste Koppelschaltungen (9) und/oder mehrere zweite Koppelschaltungen (10) aufweist.

3. Koppeleinrichtung nach Anspruch 1 oder 2, **dadurch gekennzeichnet, dass** die erste Koppelschaltung (9) als Koppelnetzwerk zur Übertragung von Breitband-Powerline-Signalen ausgebildet ist, wobei das Koppelnetzwerk einen Übertrager, einen Transformator, eine oder mehrere Kapazitäten und/oder eine oder mehrere Spulen aufweist.

4. Koppeleinrichtung nach einem der Ansprüche 1 bis 3, **dadurch gekennzeichnet, dass** die zweite Koppelschaltung (10) einen Übertrager, einen Transformator, einen oder mehrere Kapazitäten und/oder eine oder mehrere Spulen aufweist.

5. Koppeleinrichtung nach einem der Ansprüche 1 bis 4, **dadurch gekennzeichnet, dass** die zweite Koppelschaltung (10) einen Spannungswandler umfasst.

6. Koppeleinrichtung nach einem der Ansprüche 1 bis 5, **dadurch gekennzeichnet, dass** die zweite Koppelschaltung (10) eine Schutzbeschaltung zum Schutz von an dem Messanschluss angeschlossener Messgeräte (14) aufweist.

7. Koppeleinrichtung nach einem der Ansprüche 1 bis 6, **dadurch gekennzeichnet, dass** die zweite Koppelschaltung (10) eine Schaltung zum Aufbereiten eines Messsignals aufweist, das für die physikalische Größe im Energieversorgungsnetzwerk (12) repräsentativ ist, und dass das aufbereitete Messsignal am Messausgang (5) der Koppeleinrichtung (1) anliegt.

8. Koppeleinrichtung nach einem der Ansprüche 1 bis 7, **dadurch gekennzeichnet, dass** die zweite Koppelschaltung (10) für eine bestimmte Messung abstimmbar ausgebildet ist.

9. Koppeleinrichtung nach einem der Ansprüche 1 bis 8, **dadurch gekennzeichnet, dass** der Messausgang (5) zum Anschluss eines Spannungsmessgeräts, eines Frequenzmessgeräts und/oder eines Netzanalysators ausgebildet ist oder dass der Messausgang (5) als Uo-Schnittstelle ausgebildet ist.

10. Koppeleinrichtung nach einem der Ansprüche 1 bis 9, **dadurch gekennzeichnet, dass** die zweite Koppelschaltung (10) und der Messausgang (5) zum Anschluss eines Messgeräts zur Bestimmung von Teilentladungen ausgebildet sind.

11. Koppeleinrichtung nach einem der Ansprüche 1 bis 10, **dadurch gekennzeichnet, dass** die Koppelkondensator (7) einen Wert zwischen 1 nF und 10 nF aufweist.

12. Koppeleinrichtung nach einem der Ansprüche 1 bis 11, **dadurch gekennzeichnet, dass** die zweite Koppelschaltung (10) derart ausgebildet ist, dass der Koppelkondensator (7) und die zweite Koppelschaltung (10) gemeinsam eine lineare Kennlinie über den Messbereich der physikalischen Größen hinweg aufweisen.

13. Koppeleinrichtung nach einem der Ansprüche 1 bis 12, **dadurch gekennzeichnet, dass** die erste und die zweite Koppelschaltung (9, 10) zur Vermeidung einer gegenseitigen Störung eines Kommunikationsvorgangs und eines Messvorgangs gegenseitig geschirmt aufgebaut sind.

14. Koppeleinrichtung nach einem der Ansprüche 1 bis 13, **dadurch gekennzeichnet, dass** die erste und die zweite Koppelschaltung (9, 10) zur Vermeidung einer gegenseitigen Störung eines Kommunikationsvorgangs und eines Messvorgangs dazu ausgebildet sind, eine gegenseitige Koordinierung des Kommunikationsvorgangs und des Messvorgangs vorzunehmen.

15. Messknoten zum Erfassen einer physikalischen Größe in einem mehrphasigen Energieversorgungsnetzwerk, umfassend:

eine Koppeleinrichtung (1) nach einem der Ansprüche 1 bis 14, wobei die Koppeleinrichtung (1) an eine oder mehrere Phasen (L1, L2, L3) des Energieversorgungsnetzwerks (12) angekoppelt ist,
ein Messgerät (14), das ein an dem Messanschluss (5) der Koppeleinrichtung (1) anliegendes Signal auswertet und einen digitalisierten Wert erzeugt, der für das Signal repräsentativ ist, und
ein Powerline-Endgerät (13), das mit dem Messgerät (14) kommunizierend verbunden ist und eine Kommunikation über die Koppeleinrichtung (1) zwischen dem Messgerät (14) und einem über das Energieversorgungsnetzwerk (12) verbundenen entfernten Endgerät ermöglicht.

## Claims

1. Coupling device for coupling a powerline terminal and a measurement device to a multi-phase energy supply network, wherein the coupling device (1) has a communication connection (4) for connecting the powerline terminal (13) and a measurement connection (5) for connecting the measurement device (14), wherein the coupling device (1) comprises:

   a coupling capacitor (7) having a first and a second connection (6, 8), wherein the first connection (6) of the coupling capacitor (7) is connected to one of the phases (L1, L2, L3) of the energy supply network (12), and
   a first coupling circuit (9) which is connected at the network side to the second connection (8) of the coupling capacitor (7), wherein the connection of the first coupling circuit (9) facing away from the energy supply network (12) is connected to the communication connection (4) and wherein the first coupling circuit (9) is configured to direct powerline signals from the energy supply network (12) to the communication connection (4), and vice versa,
   **characterised by** a second coupling circuit (10), wherein the second coupling circuit (10) is connected at the network side to the second connection (8) of the coupling capacitor (7), wherein the connection of the second coupling circuit (10) facing away from the energy supply network (12) is connected to the measurement connection (5), and wherein the second coupling circuit (10) is constructed to provide at the measurement connection (5) a measurement signal which is representative of a physical variable in the energy supply network (12).

2. Coupling device according to claim 1, **characterised in that** the coupling device (1) has for coupling to a plurality of phases (L1, L2, L3) of the energy supply network (12) a plurality of coupling capacitors (7) and a plurality of first coupling circuits (9) and/or a plurality of second coupling circuits (10).

3. Coupling device according to claim 1 or 2, **characterised in that** the first coupling circuit (9) is constructed as a coupling network for transmitting broadband powerline signals, wherein the coupling network has a transducer, a transformer, one or more capacitors and/or one or more coils.

4. Coupling device according to any one of claims 1 to
3, **characterised in that** the second coupling circuit (10) has a transducer, a transformer, one or more capacitors and/or one or more coils.

5. Coupling device according to any one of claims 1 to 4, **characterised in that** the second coupling circuit (10) comprises a voltage transformer.

6. Coupling device according to any one of claims 1 to 5, **characterised in that** the second coupling circuit (10) has a protection circuit for protecting measurement devices (14) which are connected to the measurement connection.

7. Coupling device according to any one of claims 1 to 6, **characterised in that** the second coupling circuit (10) has a circuit for providing a measurement signal which is representative of the physical variable in the energy supply network (12) and **in that** the measurement signal provided is applied to the measurement output (5) of the coupling device (1).

8. Coupling device according to any one of claims 1 to 7, **characterised in that** the second coupling circuit (10) is constructed so as to be able to be adapted for a specific measurement.

9. Coupling device according to any one of claims 1 to 8, **characterised in that** the measurement output (5) is constructed for connecting a voltage measurement device, a frequency measurement device and/or a network analyser or **in that** the measurement output (5) is constructed as a $U_0$ interface.

10. Coupling device according to any one of claims 1 to 9, **characterised in that** the second coupling circuit (10) and the measurement output (5) are constructed for connecting a measurement device for determining partial discharges.

11. Coupling device according to any one of claims 1 to 10, **characterised in that** the coupling capacitor (7) has a value between 1 nF and 10 nF.

12. Coupling device according to any one of claims 1 to 11, **characterised in that** the second coupling circuit (10) is constructed in such a manner that the coupling capacitor (7) and the second coupling circuit (10) together have a linear characteristic line over the measurement range of the physical variables.

13. Coupling device according to any one of claims 1 to 12, **characterised in that** the first and the second coupling circuits (9, 10) in order to prevent mutual interference of a communication operation and a measurement operation are constructed so as to be shielded with respect to each other.

**14.** Coupling device according to any one of claims 1 to 13, **characterised in that** the first and second coupling circuits (9, 10) in order to prevent mutual interference of a communication operation and a measurement operation are constructed to carry out mutual coordination of the communication operation and the measurement operation.

**15.** Measurement nodes for detecting a physical variable in a multi-phase energy supply network, comprising:

a coupling device (1) according to any one of claims 1 to 14, wherein the coupling device (1) is coupled to one or more phases (L1, L2, L3) of the energy supply network (12),
a measurement device (14) which evaluates a signal applied to the measurement connection (5) of the coupling device (1) and which produces a digitised value which is representative of the signal, and
a powerline terminal (13) which is connected to the measurement device (14) in a communicating manner and which enables communication via the coupling device (1) between the measurement device (14) and a remote terminal which is connected via the energy supply network (12).

**Revendications**

**1.** Dispositif de couplage pour le couplage d'un terminal CPL et d'un appareil de mesure à un réseau d'alimentation en énergie polyphasé, le dispositif de couplage (1) présentant une connexion de communication (4) pour la connexion du terminal CPL (13) et une connexion de mesure (5) pour la connexion de l'appareil de mesure (14), le dispositif de couplage (1) comprenant :

un condensateur de couplage (7) avec une première et une deuxième connexion (6, 8), la première connexion (6) du condensateur de couplage (7) étant raccordée à l'une des phases (L1, L2, L3) du réseau d'alimentation en énergie (12), et
un premier circuit de couplage (9), qui est raccordé côté réseau à la deuxième connexion (8) du condensateur de couplage (7), la connexion du premier circuit de couplage (9) qui est éloignée du réseau d'alimentation en énergie (12) étant raccordée à la connexion de communication (4), et le premier circuit de couplage (9) étant constitué pour conduire des signaux CPL à partir du réseau d'alimentation en énergie (12) vers la connexion de communication (4) et inversement, **caractérisé par** un deuxième circuit de couplage (10), le deuxième circuit de couplage (10) étant, côté réseau, raccordé à la deuxième connexion (8) du condensateur de couplage (7), la connexion du deuxième circuit de couplage (10) éloignée du réseau d'alimentation en énergie (12) étant raccordée à la connexion de mesure (5), et le deuxième circuit de couplage (10) étant constitué pour fournir sur la connexion de mesure (5) un signal de mesure qui est représentatif d'une grandeur physique dans le réseau d'alimentation en énergie (12).

**2.** Dispositif de couplage selon la revendication 1, **caractérisé en ce que**, pour le couplage à plusieurs phases (L1, L2, L3) du réseau d'alimentation en énergie (12), le dispositif de couplage (1) présente plusieurs condensateurs de couplage (7) et plusieurs premiers circuits de couplage (9) et/ou plusieurs deuxièmes circuits de couplage (10).

**3.** Dispositif de couplage selon la revendication 1 ou 2, **caractérisé en ce que** le premier circuit de couplage (9) est constitué en tant que réseau de couplage pour la transmission de signaux CPL à large bande, le réseau de couplage présentant un transmetteur, un transformateur, un ou plusieurs condensateurs et/ou une ou plusieurs bobines.

**4.** Dispositif de couplage selon l'une des revendications 1 à 3, **caractérisé en ce que** le deuxième circuit de couplage (10) présente un transmetteur, un transformateur, un ou plusieurs condensateurs et/ou une ou plusieurs bobines.

**5.** Dispositif de couplage selon l'une des revendications 1 à 4, **caractérisé en ce que** le deuxième circuit de couplage (10) comprend un transformateur de tension.

**6.** Dispositif de couplage selon l'une des revendications 1 à 5, **caractérisé en ce que** le deuxième circuit de couplage (10) présente un circuit de protection destiné à la protection d'appareils de mesure (14) connectés à la connexion de mesure.

**7.** Dispositif de couplage selon l'une des revendications 1 à 6, **caractérisé en ce que** le deuxième circuit de couplage (10) présente un circuit à destiné au traitement d'un signal de mesure qui est représentatif de la grandeur physique dans le réseau d'alimentation en énergie (12), et **en ce que** le signal de mesure traité est présent à la sortie de mesure (5) du dispositif de couplage (1).

**8.** Dispositif de couplage selon l'une des revendications 1 à 7, **caractérisé en ce que** le deuxième circuit de couplage (10) est constitué de façon à pouvoir être harmonisé pour une mesure définie.

**9.** Dispositif de couplage selon l'une des revendications 1 à 8, **caractérisé en ce que** la sortie de mesure (5) est constituée pour la connexion d'un appareil de mesure de tension, d'un appareil de mesure de fréquence et/ou d'un analyseur de réseau ou **en ce que** la sortie de mesure (5) est constituée en tant qu'interface $U_0$.

**10.** Dispositif de couplage selon l'une des revendications 1 à 9, **caractérisé en ce que** le deuxième circuit de couplage (10) et la sortie de mesure (5) sont constitués pour la connexion d'un appareil de mesure en vue de la détermination de décharges partielles.

**11.** Dispositif de couplage selon l'une des revendications 1 à 10, **caractérisé en ce que** le condensateur de couplage (7) présente une valeur entre 1 nF et 10 nF.

**12.** Dispositif de couplage selon l'une des revendications 1 à 11, **caractérisé en ce que** le deuxième circuit de couplage (10) est constitué de telle sorte que le condensateur de couplage (7) et le deuxième circuit de couplage (10) présentent conjointement une courbe caractéristique linéaire sur toute la plage de mesure des grandeurs physiques.

**13.** Dispositif de couplage selon l'une des revendications 1 à 12, **caractérisé en ce que** le premier et le deuxième circuit de couplage (9, 10) sont réalisés de façon blindée l'un vis-à-vis de l'autre afin d'éviter une perturbation réciproque d'un processus de communication et d'un processus de mesure.

**14.** Dispositif de couplage selon l'une des revendications 1 à 13, **caractérisé en ce que**, afin d'éviter une perturbation réciproque d'un processus de communication et d'un processus de mesure, le premier et le deuxième circuit de couplage (9, 10) sont constitués pour réaliser une coordination réciproque du processus de communication et du processus de mesure.

**15.** Noeud de mesure destiné à la détection d'une grandeur physique dans un réseau d'alimentation en énergie polyphasé, comprenant :

un dispositif de couplage (1) selon l'une des revendications 1 à 14, le dispositif de couplage (1) étant couplé à une ou plusieurs phases (L1, L2, L3) du réseau d'alimentation en énergie (12), un appareil de mesure (14) qui analyse un signal présent sur la connexion de mesure (5) du dispositif de couplage (1) et produit une valeur numérisée qui est représentative du signal, et un terminal CPL (13) qui est raccordé de façon communicante à l'appareil de mesure (14) et permet une communication par le bais du dispositif de couplage (1) entre l'appareil de mesure (14) et un terminal éloigné raccordé par le biais du réseau d'alimentation en énergie (12).

Fig. 1

EP 2 863 553 B1

L1

L2

L3

EP 2 863 553 B1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20110118888 A1
- CA 2260486 A1

- US 20080122642 A1